# EUROPÄISCHE PATENTANMELDUNG

(11) **EP 0 979 842 A1**
(43) Veröffentlichungstag der Anmeldung: **16.02.2000**
(21) Anmeldenummer: 99115843.7
(22) Anmeldetag: 12.08.1999
(51) Int. Cl.: C08L 53/00, C08L 25/08

(54) **Thermoplastische Formmassen auf der Basis von Sternpolymeren, thermoplastischen Elastomeren und Polyarylenethern**

(30) Priorität: 13.08.1998 DE 19836410
(71) Anmelder: BASF AKTIENGESELLSCHAFT, 67056 Ludwigshafen (DE)
(72) Erfinder: Wünsch, Josef, Dr., 67105 Schifferstadt (DE); Knoll, Konrad, Dr., 67069 Ludwigshafen (DE); Gausepohl, Hermann, Dr., 67112 Mutterstadt (DE)

(57) **Zusammenfassung**

Thermoplastische Formmassen, enthaltend

- A) 20 bis 96 Gew.-%: Sternpolymere, erhältlich durch Polymerisation von vinylaromatischen Monomeren mit einem verzweigenden Monomerbaustein, der mindestens zwei vinylaromatische funktionelle Reste enthält,
- B) 3 bis 50 Gew.-%: Copolymere aus vinylaromatischen Monomeren, 1,1-Diphenylethylen und ggf. Dienen,
- C) 1 bis 15 Gew.-%: Polyarylenether,
- D) 0 bis 5 Gew.-%: Nukleierungsmittel,
- E) 0 bis 5 Gew.-%: Antioxidantien,
- F) 0 bis 5 Gew.-%: Stabilisatoren
und
- G) 0 bis 50 Gew.-%: faser- oder teilchenförmige Füllstoffe.

## Beschreibung

Die vorliegende Erfindung betrifft thermoplastische Formmassen, enthaltend
- A) 20 bis 96 Gew.-%: Sternpolymere, erhältlich durch Polymerisation von vinylaromatischen Monomeren mit einem verzweigenden Monomerbaustein, der mindestens zwei vinylaromatische funktionelle Reste enthält,
- B) 3 bis 50 Gew.-%: Copolymere aus vinylaromatischen Monomeren, 1,1-Diphenylethylen und ggf. Dienen,
- C) 1 bis 15 Gew.-%: Polyarylenether,
- D) 0 bis 5 Gew.-%: Nukleierungsmittel,
- E) 0 bis 5 Gew.-%: Antioxidantien,
- F) 0 bis 5 Gew.-%: Stabilisatoren
und
- G) 0 bis 50 Gew.-%: faser- oder teilchenförmige Füllstoffe.

Weiterhin betrifft die vorliegende Erfindung Verfahren zur Herstellung der thermoplastischen Formmassen, deren Verwendung zur Herstellung von Fasern, Folien und Formkörpern sowie die daraus erhältlichen Fasern, Folien und Formkörper.

Die EP-A 546 497 beschreibt Zusammensetzungen aus syndiotaktischem Polystyrol, anorganischem Füllstoff, modifiziertem Polyphenylenether und Kautschuk. Die Wärmeformbeständigkeit und Schlagzähigkeit dieser Zusammensetzungen sind für viele Anwendungen nicht ausreichend.

Aus der WO 94/24206 sind Zusammensetzungen aus syndiotaktischem Polystyrol, bestimmten Kautschuken, Nukleierungsmittel, Verstärkungsmittel und Polyphenylenether bekannt. Auch hier sind die Wärmeformbeständigkeit und Schlagzähigkeit zu verbessern.

Aufgabe der vorliegenden Erfindung war es daher, thermoplastische Formmassen zur Verfügung zu stellen, die insbesondere eine gute Wärmeformbeständigkeit und Schlagzähigkeit aufweisen, bei gleichzeitiger effektiver Modifizierung.

Demgemäß wurden die eingangs definierten thermoplastischen Formmassen gefunden.

Weiterhin wurden Verfahren zur Herstellung der thermoplastischen Formmassen, deren Verwendung zur Herstellung von Fasern, Folien und Formkörpern sowie die daraus erhältlichen Fasern, Folien und Formkörper gefunden.

Die erfindungsgemäßen thermoplastischen Formmassen enthalten als Komponente A) 20 bis 96 Gew.-%, vorzugsweise 30 bis 94 Gew.-%, insbesondere 40 bis 92 Gew.-% eines Sternpolymeren, welches durch Polymerisation von vinylaromatischen Monomeren mit einem verzweigenden Monomerbaustein, der mindestens zwei vinylaromatische funktionelle Reste enthält, erhältlich ist.

Vorzugsweise werden diese Sternpolymere A) in Gegenwart eines Katalysatorsystems hergestellt, welches als aktive Bestandteile einen Übergangsmetallkomplex der II. bis VIII. Nebengruppe des Periodensystems der Elemente, bevorzugt der III. bis VIII. Nebengruppe, insbesondere der IV. Nebengruppe, also Titan, Zirkonium oder Hafnium, eine metalloceninmionenbildende Verbindung, beispielsweise offenkettige oder cyclische Alumoxanverbindungen, starke, neutrale Lewissäuren, ionische Verbindungen mit lewissauren Kationen oder ionische Verbindungen mit Bränstedsäuren als Kationen, und ggf. eine Aluminiumverbindung wie Aluminiumtrialkyle oder Dialkylaluminiumhydride, enthält.

Als verzweigende Monomerbausteine sind Verbindungen der allgemeinen Formel (I) 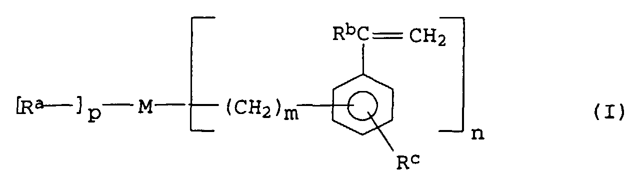 bevorzugt, in der die Substituenten und Indices die folgende Bedeutung haben:
- R^{a}: Wasserstoff, Halogen, oder ein inerter organischer Rest mit bis zu 20 C-Atomen, wobei R^{a} im Falle von p ≥ 2 gleich oder verschieden sein kann und zwei Reste R^{a} zusammen mit dem an sie gebundenen Metallatom einen 3 bis 8-gliedrigen Ring bilden können und R^{a} ferner ein üblicher Komplexligand sein kann, wenn M ein Übergangsmetall darstellt,
- R^{b}: Wasserstoff, C₁-C₄-Alkyl oder Phenyl;
- R^{c}: Wasserstoff, C₁-C₄-Alkyl, Phenyl, Chlor oder ein ungesättigter Kohlenwasserstoffrest mit 2 bis 6 C-Atomen;
- M: C, Si, Ge, Sn, B, Al, Ga, N, P, Sb, Ti, Zr, Hf, V, Nb, Ta, Cr, Mo, W, Mn, Fe, Ru, Os, Co, Rh, Ir, Ni Pd, Pt, Cu, Zn, Cd,
- n: 2-6;
- m: 0-20;
- p: 0-4;
mit der Maßgabe, daß die Summe aus n + p der Valenz von M entspricht.

Besonders bevorzugt sind verzweigende Monomerbausteine der Formel (I), in der M Kohlenstoff, Silizium, Germanium, Zinn oder Titan bedeutet, da sie leicht zugänglich sind. Der Index m steht vorzugsweise für 0 bis 8, besonders bevorzugt für 0 bis 4.

Weiterhin bevorzugt sind Titan enthaltende Monomeren der Formel Ia 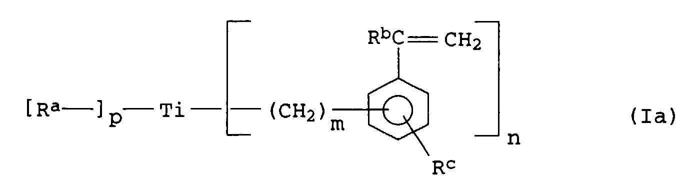 und insbesondere die Titanverbindung Ib 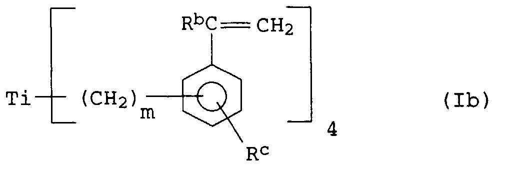 in der R^{a}, R^{b} und R^{c} sowie m, n und p die obengenannte Bedeutung haben.

Als vinylaromatische Verbindungen eignen sich besonders Verbindungen der allgemeinen Formel II 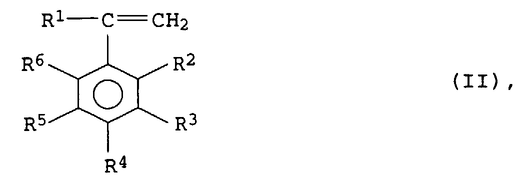 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel II eingesetzt, in denen
- R¹: Wasserstoff bedeutet
und
- R² bis R⁶: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel II beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-vinylnaphthalin oder 9-Vinylanthracen.

Es können auch Mischungen verschiedener vinylaromatischer verbindungen eingesetzt werden, wobei eine Komponente auch weitere Kohlenwasserstoffreste wie Vinylgruppen, Allylgruppen, Methallylgruppen, Butenyl- oder Pentenylgruppen, vorzugsweise Vinylgruppen am Phenylring tragen kann. Vorzugsweise wird jedoch nur eine vinylaromatische Verbindung verwendet.

Besonders bevorzugte vinylaromatische Verbindungen sind Styrol und p-Methylstyrol.

Weitere Einzelheiten zu den Sternpolymeren A) sowie Verfahren zu deren Herstellung sind beispielsweise der WO 98/08881 zu entnehmen.

Als Komponente B) enthalten die erfindungsgemäßen thermoplastischen Formmassen 3 bis 50 Gew.-%, vorzugsweise 3,5 bis 40 Gew.-%, insbesondere 4 bis 30 Gew.-% Copolymere aus vinylaromatischen Monomeren, 1,1-Diphenylethylen und ggf. Dienen. Diese Komponente B) ist auch als thermoplastisches Elastomer (TPE) zu bezeichnen.

Vorzugsweise wird die Komponente B) durch anionische Polymerisation hergestellt.

Besonders bevorzugt als Komponente B) sind Dreiblockcopolymere, insbesondere solche, die hydriert sind. Vorzugsweise werden solche Copolymere als Komponente B) eingesetzt, die aus Styrol, 1,1-Diphenylethylen und Butadien hergestellt werden, insbesondere Styrol (S)/1.1-Diphenylethylen (DPE)-Butadien -S/DPE-Dreiblockcopolymere, wobei der Butadienblock hydriert ist (EB), also S/DPE-EB-S/DPE.

Weiterhin eignen sich Copolymere oder Blockcopolymere mit mindestens einem Block A aus vinylaromatischen Monomeren a1) und 1,1-Diphenylethylen oder dessen an den aromatischen Ringen ggf. mit Alkylgruppen mit bis zu 22 C-Atomen substituierten Derivaten a2), erhältlich durch anionische Polymerisation, wobei man zur Bildung des Copolymeren oder des Blockes A eine Starterlösung, bestehend aus dem Umsetzungsprodukt aus einem anionischen Polymerisationsinitiator und mindestens der equimolaren Menge an Monomeren a2), verwendet.

Vorzugsweise werden Blockcopolymere mit mindestens einem Block A und mindestens einem, gegebenenfalls hydrierten Block B aus Dienen b), durch sequentielle anionische Polymerisation, hergestellt, wobei man nacheinander die folgenden Verfahrensschritte durchführt:
I) Bildung eines Blockes A durch
   I.1) Herstellung einer Starterlösung, bestehend aus dem Umsetzungsprodukt aus einem anionischen Polymerisationsinitiator und mindestens der equimolaren Menge an Monomeren a2),
   I.2) Zugabe der gegebenenfalls verbleibenden Restmenge an Monomeren a2) und 60 bis 100% der Gesamtmenge an Monomeren a1),
   I.3) Zugabe der gegebenenfalls verbleibenden Restmenge an Monomeren a1) nach einem Umsatz von mindestens 80% der in den vorangegangenen Verfahrensschritten zugegebenen Monomeren,
   wobei die Konzentration der Polymerisationslösung nach der letzten Monomerzugabe mindestens 35 Gew.-% beträgt,
II) anschließenden Bildung eines Blockes B durch
   II.1) Zugabe eines die Polymerisationsparameter beeinflussenden Zusatzes,
   II.2) Zugabe der Diene b) und
   gegebenenfalls den anschießenden Schritten
III) Zugabe eines Kettenabbruch- oder Kopplungsmittels,
IV) Hydrierung des Blockcopolymeren,
V) Isolierung und Aufarbeitung der Blockcopolymeren nach an sich bekannter Weise,
VI) Zusatz von Stabilisatoren.

Die Copolymeren oder die Blöcke A bestehen aus vinylaromatischen Monomeren a1) und 1,1-Diphenylethylen oder dessen an den aromatischen Ringen ggf. mit Alkylgruppen mit bis zu 22 C-Atomen, bevorzugt mit 1 bis 4 C-Atomen wie Methyl, Ethyl, i- und n-Propyl und n-,i- oder tert.-Butyl substituierten Derivaten a2). Als vinylaromatische Monomere a1) werden bevorzugt Styrol und dessen in α-Stellung oder am aromatischen Ring mit 1 bis 4 C-Atomen substituierte Derivate, beispielsweise α-Methylstyrol, p-Methylstyrol, Ethylstyrol, tert.-Butylstyrol, Vinyltoluol verwendet. Besonders bevorzugt als Monomer a2) wird das unsubstituierte 1,1-Diphenylethylen selbst eingesetzt. Das molare Verhältnis der Einheiten, die sich von 1,1-Diphenylethylen bzw. dessen Derivaten a2) ableiten, zu Einheiten, die sich vom vinylaromatischen Monomer a1) ableiten, liegt im allgemeinen im Bereich von 1 : 1 bis 1 : 25, vorzugsweise von 1 : 1,05 bis 1 : 10 und besonders bevorzugt im Bereich von 1 : 1,1 bis 1 : 3.

Die Copolymeren oder die Blöcke A sind vorzugsweise statistisch aufgebaut und besitzen ein Molekulargewicht Mw von im allgemeinen 1 000 bis 500 000, vorzugsweise 3 000 bis 100 000, besonders bevorzugt von 4 000 bis 30 000.

Als Dien b) für den Block B eignen sich grundsätzlich alle Diene, bevorzugt werden jedoch solche mit konjugierten Doppelbindungen wie 1,3-Butadien, Isopren, 2,3-Dimethylbutadien, 1,3-Pentadien, 1,3-Hexadiene, Phenylbutadien, Piperylen oder deren Mischungen. Besonders bevorzugt werden 1,3-Butadien und Isopren eingesetzt. Der Dienblock kann partiell oder vollständig hydriert oder unhydriert sein. Durch die Hydrierung von Polyisoprenblöcken gelangt man somit zu Ethylen-Propylen-Blöcken bzw. von Polybutadienblöcken zu Polyethylen- bzw. Polyethylen-Butylen-blöcken entsprechend dem 1,2-Vinylanteil des unhydrierten Butadienblockes. Durch die Hydrierung werden die Blockcopolymeren thermostabiler und vor allem alterungs-und witterungsbeständiger. Die Molekulargewichte Mw der Blöcke B liegen im allgemeinen im Bereich von 10 000 bis 500 000, vorzugsweise von 20 000 bis 350 000 und besonders bevorzugt von 20 000 bis 200 000. Die Glastemperaturen der Blöcke B liegen im allgemeinen unter -30°C, bevorzugt unter -50°C.

Der Gewichtsanteil der Summe aller Blöcke A zum gesamten Blockcopolymeren beträgt im allgemeinen 5 bis 95 Gew.-%, bevorzugt 5 bis 50 Gew.-%, besonders bevorzugt 25 bis 35 Gew.-%.

Die anionische Polymerisation wird mittels metallorganischer Verbindungen initiiert. Als Initiatoren können die üblichen Alkalimetallalkyle oder -aryle eingesetzt werden. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Hexyldiphenyl-, Hexamethylendi-, Butadienyl-, Isoprenyl- oder Polystyryllithium. Besonders bevorzugt wird 1,1-Diphenylhexyllithium verwendet, das leicht aus der Umsetzung von 1,1-Diphenylethylen mit n- oder sec.-Butyllithium erhältlich ist. Die benötigte Initiatormenge ergibt sich aus dem gewünschten Molekulargewicht und liegt in der Regel im Bereich von 0,002 bis 5 Molprozent bezogen auf die zu polymerisierende Monomermenge.

Als Lösungsmittel eignen sich gegenüber dem metallorganischen Initiator inerte Lösungsmittel. Zweckmäßigerweise verwendet man aliphatische, cycloaliphatische oder aromatische Kohlenwasserstoffe mit 4 bis 12 Kohlenstoffatomen wie Pentan, Hexan, Heptan, Cyclopentan, Cyclohexan, Methylcyclohexan, Dekalin, Iso-Oktan, Benzol, Alkylbenzole wie Toluol, Xylol oder Ethylbenzol oder geeignete Gemische.

Nach beendetem Molekulargewichtsaufbau können die "lebenden" Polymerenden gegebenenfalls mit üblichen Kettenabbruch- oder Kopplungsmitteln in Mengen, die sich gewöhnlich nach der eingesetzten Initiatormenge richten, umgesetzt werden.

Als Kettenabbruchmittel eignen sich protonenaktive Substanzen oder Lewissäuren wie beispielsweise Wasser, Alkohole, aliphatische und aromatische Carbonsäuren sowie anorganische Säuren wie Kohlensäure, Phosphorsäure oder Borsäure.

Zur Kopplung der Blockcopolymeren können bi- oder mehrfunktionelle Verbindungen, beispielsweise Halogenide von aliphatischen oder araliphatischen Kohlenwasserstoffen wie 1,2-Dibromethan, Bischlormethylbenzol, Siliziumtetrachlorid, Dialkyl- oder Diarylsiliziumdichlorid, Alkyl- oder Arylsiliziumtrichlorid, Zinntetrachlorid, polyfunktionelle Aldehyde wie Terephthalsäuredialdehyd, Ketone, Ester, Anhydride oder Epoxide eingesetzt werden. Bevorzugt werden Carbonsäureester wie Essigsäureethylester als Kopplungsmittel eingesetzt, wenn das Blockcopolymere nicht hydriert wird. Bei hydrierten Blockcopolymeren verwendet man bevorzugt 1,2-Dibromethan oder Diepoxide, insbesondere Diglycidylether, wie 1,4-Butandioldiglycidylether.

Als ein die Polymerisationsparameter beeinflussender Zusatz (Randomizer) können beispielsweise Lewisbasen wie polare, aprotische Lösungsmittel, oder kohlenwasserstofflösliche Metallsalze eingesetzt werden. Als Lewisbasen können beispielsweise Dimethylether, Diethylether, Ethylenglykoldimethylether, Diethylenglykoldimethylether, Tetrahydrofuran, Tetrahydrofurfurylether wie Tetrahydrofurfurylmethylether oder tertiäre Amine wie Pyridin, Trimethylamin, Triethylamin und Tributylamin oder peralkylierte Bi- oder Oligoamine wie Tetramethylethylendiamin verwendet werden. Diese werden üblicherweise in Konzentrationen von 0,1 bis 5 Volumenprozent bezogen auf das Lösungsmittel eingesetzt. Unter den kohlenwasserstofflöslichen Metallsalzen verwendet man bevorzugt Alkali- oder Erdalkalisalze primärer, sekundärer und vor allem tertiärer Alkohole, besonders bevorzugt die Kaliumsalze wie Kaliumtriethylcarbinolat oder Kaliumtetrahydrolinaloolat. Das molare Verhältnis von Metallsalz zu Initiator beträgt gewöhnlich 1 : 5 bis 1 : 200, bevorzugt 1 : 30 bis 1 : 100.

Auswahl und Menge des Randomizers werden je nach angestrebtem Endprodukt ausgewählt. Für Polymerisate, die nicht zur Hydrierung vorgesehen sind und wenn beispielsweise im Falle der Verwendung von Butadien ein hoher 1,4-Vinylanteil angestrebt wird, setzt man vorzugsweise ein kohlenwasserstofflösliches Kaliumsalz ein. Für Polymerisate, die anschließend hydriert werden sollen, wird bevorzugt Tetrahydrofuran eingesetzt. Die Menge wird hierfür so gewählt, daß beispielsweise im Falle der Verwendung von Butadien ein 1,2-Vinylgehalt von ungefähr 20 bis 50 % resultiert.

Bei diesem Verfahren wird vorzugsweise die Gesamtmenge der Mono-meren a2) in einem Lösungsmittel vorgelegt und mit dem Polymerisationsinitiator versetzt. Es ist aber auch möglich, Teile der Monomeren a2) oder des Lösungsmittels erst zu einem späteren Zeitpunkt zuzugeben. Die Menge an Polymerisationsinitiator ergibt sich aus eventuell vorhandenen, durch Austitrieren entfernbaren protischen Verunreinigungen in Monomeren und Lösungsmittel zuzüglich der Menge, die sich aus, dem gewünschten Molekulargewicht und der insgesamt zu polymerisierenden Monomermenge berechnet. Bevorzugt wird n- oder sec- Butyllithium verwendet, welches sich innerhalb einiger Stunden, in der Regel im Bereich von 0,5 bis 40 Stunden bei 20 bis 70°C mit den Monomeren a2) vollständig zu 1,1-Diphenylhexyllithium bzw. den entsprechenden substituierten Derivaten umsetzt. Zu der bevorzugt auf 40 bis 70°C temperierten Vorlage werden 60 bis 100 %, vorzugsweise 70 bis 90 % der gesamten, zur Bildung des Blockes A benötigten Menge an Monomeren a1) zudosiert. Die Zulaufzeit richtet sich nach der Reaktivität der verwendeten Monomeren und der Konzentration und beträgt im allgemeinen zwischen 0,5 und 10 Stunden bei einer Temperatur von 40 bis 70°C. Die Zugabe der verbleibende Menge der Monomeren a1) erfolgt in der Regel nach einem Umsatz von über 80%, bevorzugt über 95 % der vorgelegten bzw. zuvor zugegebenen Monomeren. Der Block A wird bei hoher Monomerkonzentration polymerisiert, wobei eine Verringerung der Restmonomeren a2) erreicht werden kann. Im allgemeinen beträgt die Konzentration der Polymerisationslösung nach der letzten Monomerzugabe mindestens 35 Gew.%, besonders bevorzugt über 50 Gew.-%.

Bei der Herstellung der Blockcopolymeren mit mindestens einem Block B wird zunächst ein Block A wie oben beschrieben, anschließend ein Block B durch sequentielle anionische Polymerisation gebildet.

Nach Bildung des A-Blockes, vor Zugabe der Diene b) wird der die Polymerisationsparameter beeinflussende Zusatz der Polymerisationslösung zugegeben. Anschließend wird der Block B durch Zugabe der Diene b) polymerisiert. Vor oder während der Zugabe des Diens empfiehlt es sich, die Reaktionsmischung mit einem inerten Lösungsmittel zu verdünnen, um eine ausreichende Durchmischung und Wärmeabfuhr sicherzustellen. Die Polymerisationstemperatur für den Block B beträgt bevorzugt 50 bis 90°C, bei Verwendung von polaren, aprotischen Lösungsmitteln als Randomizer besonders bevorzugt 50 bis 70°C.

Die erhaltenen A-B-Blockcopolymeren können durch Kettenabbruch- oder Kopplungsmittel abgebrochen bzw. im Falle von bifunktionellen Kopplungsmitteln zu linearen Dreiblockcopolymeren oder im Falle von höherfunktionellen Kopplungsmitteln zu sternförmigen Blockcopolymeren verknüpft werden.

Das Verfahren ist nicht auf die Lösungspolymerisation beschränkt. Beispielsweise läßt sich das Verfahren auch einfach auf die Dispersionspolymerisation anwenden. Hierzu verwendet man zweckmäßigerweise ein gegenüber den anionischen Polymerisationsinitiatoren inertes Dispergiermedium, in dem der A-Block nicht löslich ist, wie Propan, Butan, Isobutan, Pentan oder dessen verzweigte Isomere, Hexan, Heptan, Oktan oder Isooktan. Um eine kleine Partikelgröße zu erhalten, werden im allgemeinen 0,1 bis 2 Gew.-% eines Dispergators zugesetzt. Geeignete Dispergatoren sind z.B. Styrol/Butadien-Zweiblockcopolymere mit einer möglichst hohen Molmasse von beispielsweise über 100 000 g/mol.

Die Blockcopolymeren können anschießend nach den gängigen Methoden hydriert werden. Die Hydrierung der Blockcopolymeren kann nach den für Umsetzungen an Polymeren einerseits und für die Hydrierung olefinischer Doppelbindungen andererseits üblichen Regeln geschehen, die allgemein bekannt sind. Geeignet sind hierfür Katalysatoren aus Metallen der Eisengruppe, insbesondere Nickel und Cobalt in Kombination mit geeigneten Reduktionsmitteln wie Aluminiumalkylen.

Beispielsweise wird eine Lösung des Hydrierkatalysators bequem wie folgt hergestellt: Zu einer 1%igen Lösung von Nickelacetylacetonat in Toluol wird bei Zimmertemperatur eine 20 %ige Lösung von Aluminiumtriisobutyl in Hexan gegeben, wobei das Gewichtsverhältnis von Nickelacetylacetonat zu Triisobutylaluminium im Bereich von 1:4 liegt. Nach Abklingen der schwach exothermen Reaktion wird die frische Katalysatorlösung zur Polymerlösung gegeben und mit Wasserstoff beaufschlagt. Pro kg Polymer sind 1,5 g (0,15 Gew.%) Nickel-acetylacetonat ausreichend; wenn das Reaktionsgemisch besonders rein ist, genügen schon 0,15 g. Die erzielbare Hydriergeschwindigkeit hängt von Katalysatorkonzentration, Wasserstoffdruck und Reaktionstemperatur ab. Angestrebte Hydriergrade von über 95 % werden bei 15 bar Wasserstoffpartialdruck und Temperaturen zwischen 180 und 200°C schon nach 30 bis 120 Minuten erreicht. Bei Temperaturen um 120°C dauert die Hydrierung 8 bis 16 Stunden. Voraussetzung für eine gute Raum-Zeit-Ausbeute ist eine gute Einmischung des Wasserstoffgases. Hierfür wird ein wirksamer Rührer mit guter vertikaler Durchmischung benötigt, der außerdem Oberfläche schafft, damit das Gas in Lösung gehen kann. Sehr geeignet sind hierfür sogenannte Begasungsrührer. Nach Beendigung der Hydrierung kann das kolloidal verteilte Nickel, welches die Polymerlösung schwarz färbt, unter Entfärbung mit einer Wasserstoffperoxid-Essigsäure-Mischung aufoxidiert werden.

Die Hydrierung kann - insbesondere im technischen Maßstab - selbstverständlich auch mit anderen homogenen und heterogenen Hydrierkatalysatoren durchgeführt werden. Besonders interessant ist die Hydrierung am Festbettkatalysator, weil eine Verunreinigung des Polymeren durch Katalysatorrückstände vermieden wird.

Die Aufarbeitung der Polymerlösung erfolgt nach den üblichen Methoden der Polymertechnologie, beispielsweise durch Entgasung in Extrudern oder Fällen mit polaren Lösungsmitteln wie Alkoholen oder durch Dispergieren in Wasser und Entfernung des Lösungsmittels durch Strippen.

Die erfindungsgemäßen thermoplastischen Formmassen enthalten als Komponente C) 1 bis 15 Gew.-%, vorzugsweise 2 bis 10 Gew.-%, insbesondere 2,5 bis 5 Gew.-% Polyarylenether.

Polyarylenether sowie Verfahren zu ihrer Herstellung sind an sich bekannt und beispielsweise in der DE-A 42 19 438 beschrieben. Von den Polyarylenethern eignen sich besonders Polyphenylenether, insbesondere mit polaren Gruppen modifizierte Polyphenylenether. Solche mit polaren Gruppen modifizierte Polyphenylenether sowie Verfahren zu deren Herstellung sind ebenfalls an sich bekannt und beispielsweise in der DE-A 41 29 499 beschrieben.

Bevorzugt werden als Komponente C) mit polaren Gruppen modifizierte Polyphenylenether eingesetzt, die aufgebaut sind aus
c₁) 70 bis 99,95 Gew.-% eines Polyphenylenethers,
c₂) 0 bis 25 Gew.-% eines vinylaromatischen Polymeren,
c₃) 0,05 bis 5 Gew.-% mindestens einer Verbindung, die mindestens eine Doppel- oder Dreifachbindung und mindestens eine funktionelle Gruppe, ausgewählt aus der Gruppe der Carbonsäuren, Carbonsäureester, Carbonsäureanhydride, Carbonsäureamide, Epoxide, Oxazoline oder Urethane enthält.

Beispiele für Polyphenylenether c₁) sind Poly(2,6-dilauryl-1,4-phenylen)ether, Poly(2,6-diphenyl-1,4-phenylen)ether, Poly(2,6-dimethoxi-1,4-phenylen)-ether, Poly(2,6-diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether.

Bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Beispiele für bevorzugte vinylaromatische Polymere c₂) sind der Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-% können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A 302 485 beschriebenen Verfahren.

Geeignete Modifiziermittel c₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁- und C₂- bis C₈-Alkanolen, die Mono- oder Diamide dieser Säuren wie N-Phenylmaleinimid, Maleinhydrazid.

Weiterhin seien beispielsweise N-Vinylpyrrolidon und (Meth)acryloylcaprolactam genannt.

Eine andere Gruppe von Modifiziermitteln umfaßt beispielsweise das Säurechlorid des Trimellitsäureanhydrids, Benzol-1,2-dicarbonsäure-anhydrid-4-carbonsäureessigsäureanhydrid, Pyromellitsäuredianhydrid, Chlorethanoylsuccinaldehyd, Chlorformylsuccinaldehyd, Zitronensäure und Hydroxysuccinsäure.

Besonders bevorzugte mit polaren Gruppen modifizierte Polyphenylenether c) in den erfindungsgemäßen Formmassen werden durch Modifizierung mit Maleinsäure, Maleinsäureanhydrid oder Fumarsäure erhalten. Derartige Polyphenylenether weisen vorzugsweise ein Molekulargewicht (Gewichtsmittelwert M_{w}) im Bereich von 10 000 bis 80 000, vorzugsweise von 20 000 bis 60 000 auf.

Dies entspricht einer reduzierten spezifischen Viskosität η_{red} von 0,2 bis 0,9 dl/g, vorzugsweise von 0,35 bis 0,8 und insbesondere 0,45 bis 0,6, gemessen in einer 1 gew.%igen Lösung in Chloroform bei 25°C nach DIN 53 726.

Als Komponente D) können die erfindungsgemäßen thermoplastischen Formmassen 0 bis 5 Gew.-%, vorzugsweise 0,1 bis 4 Gew.-%, insbesondere 0,3 bis 2 Gew.-% Nukleierungsmittel enthalten.

Dies sind beispielsweise Salze von Carbon-, organischen Sulfon- oder Phosphorsäuren, bevorzugt Natriumbenzoat, Aluminiumtris(p-tert.-butylbenzoat), Aluminiumtrisbenzoat, Aluminiumtris(p-carboxymethylbenzoat) und Aluminiumtriscaproat.

Die erfindungsgemäßen thermoplastischen Formmassen können als Komponente E) 0 bis 5 Gew.-%, vorzugsweise 0,1 bis 4 Gew.-%, insbesondere 0,2 bis 2 Gew.-% Antioxidantien enthalten.

Antioxidantien sind beispielsweise in "Plastics Additives and Modifiers Handbook", Herausgeber Jesse Edenbaum, Seite 193 bis 200 beschrieben. Zu nennen sind insbesondere sterisch gehinderte phenolische Antioxidantien. Antioxidantien können nach zwei verschiedenen Mechanismen in die Umsetzung der das Kettenwachstum aufrechterhaltenden Radikale eingreifen: Zum einen nach dem kettenabbrechenden Donormechanismus, zum anderen nach dem kettenabbrechenden Akzeptormechanismus. Für den erfindungsgemäßen Einsatz sind beide Typen geeignet.

Als Komponente F) können die erfindungsgemäßen Formmassen 0 bis 5 Gew.-%, vorzugsweise 0,1 bis 4 Gew.-%, insbesondere 0,5 bis 2 Gew.-% Stabilisatoren enthalten. Diese hier genannten Stabilisatoren sollen von den Antioxidantien E) verschieden sein. Nur beispielhaft seien Phosphite und Phosphonite, insbesondere Trisnornylphenylphosphit genannt. Weitere Stabilisatoren sind ebenfalls "Plastics Additives and Modifier Handbook" zu entnehmen, beispielsweise den Seiten 282 bis 284. Durch die Kombination der Komponenten E) und F) wird ein synergistisches System erzeugt.

Weiterhin können die erfindungsgemäßen Formmassen als Komponente G) noch 0 bis 50 Gew.-%, vorzugsweise 0 bis 45 Gew.-%, insbesondere 0 bis 40 Gew.-% faser- oder teilchenförmige Füllstoffe oder deren Mischungen enthalten.

Dies sind zum Beispiel Kohlenstoff- oder Glasfasern, Glasmatten, Glasseidenrovings oder Glaskugeln sowie Kaliumtitanatwhisker oder Aramidfasern, bevorzugt Glasfasern. Glasfasern können mit einer Schlichte und einem Haftvermittler ausgerüstet sein. Die Einarbeitung dieser Glasfasern kann sowohl in Form von Kurzglasfasern als auch in Form von Endlossträngen (Rovings) erfolgen. Bevorzugte Glasfasern enthalten eine Aminosilanschlichte.

Weiterhin können als Komponente G) noch amorphe Kieselsäure, Magnesiumcarbonat, gepulverter Quarz, Glimmer, Talkum, Feldspat oder Calciumsilicate eingesetzt werden.

Zusätzlich zu den genannten Komponenten können die erfindungsgemäßen thermoplastische Formmassen noch weitere Einsatzstoffe enthalten. Nur beispielhaft seien weitere Kautschuke, thermoplastische Polymere wie Polyamide oder weitere Zusatzstoffe wie Flammschutzmittel genannt.

Die Summe der Gew.-% der eingesetzten Komponenten beträgt stets 100.

Die erfindungsgemäßen thermoplastischen Formmassen können durch Mischen der Einzelkomponenten bei Temperaturen von 270 bis 320°C in üblichen Mischvorrichtungen, wie Knetern, Banbury-Mischern und Einschneckenextruder, vorzugsweise jedoch mit einem Zweischneckenextruder erhalten werden. Um eine möglichst homogene Formmasse zu erhalten, ist eine intensive Durchmischung notwendig. Die Abmischreihenfolge der Komponenten kann variiert werden, so können zwei oder gegebenenfalls auch mehrere Komponenten vorgemischt werden, es können aber auch alle Komponenten gemeinsam gemischt werden.

Die erfindungsgemäßen thermoplastischen Formmassen zeichnen sich durch eine gute Wärmeformbeständigkeit und Schlagzähigkeit aus, bei gleichzeitiger effektiver Modifizierung. sie eignen sich zur Herstellung von Fasern, Folien und Formkörpern.

### Beispiele

Es wurden folgende Komponenten eingesetzt:

### Komponente A)

In einem Stickstoff inertisierten Rundkolben wurden 2,0 mol Styrol (208,3 g) und 2 · 10⁻⁶ mol (1 mg) Tetra(p-vinylphenyl)methylsilan mit 3,92 ml (6 mmol) Methylaluminoxan (MAO) der Fa. Witco (1,53 M in Toluol) und 0,5 ml (0,5 mmol) Diisobutylaluminiumhydrid DIBAH (1M in Cyclohexan) der Fa. Aldrich versetzt und auf 60°C erwärmt. Anschließend initiierte man die Polymerisation mit 5,79 mg (2*10-5 mol) an Cp*TiCl₃ (Pentamethylcyclopentadienyltitaniumtrichlorid). Die Innentemperatur wurde auf 60°C einreguliert, und man ließ 2 h polymerisieren. Anschließend wurde die Polymerisation durch Zugabe von Ethanol abgebrochen. Das erhaltene Polymere wurde mit NaOH/Ethanol gewaschen und bei 50°C im Vakuum getrocknet. Die Molmassenverteilung wurde durch Hochtemperatur-GPC mit 1,2,4-Trichlorbenzol als Lösungsmittel bei 140°C bestimmt. Die Kalibrierung erfolgte mit engverteilten Polystyrolstandards.

Das entstandene Sternpolymer wies folgende Eigenschaften auf:
M_{w} = 3.002.300
M_{w}/Mₙ = 2,3
MVI [ml/10 min] = 42,8
Alken-Endgruppen: 241 %

Der Schmelzviskositätsindex (MVI) wurde nach DIN 1133 bestimmt, die Ermittlung der Alken-Endgruppen erfolgte durch Jod-Titration (Wijs-Titration).

### Komponente B)

### Herstellung des Hydrierkatalysators:

In einem Rundkolben wurden unter Stickstoff 1125 ml einer bei Raumtemperatur gesättigten Nickelacetylacetonat-Lösung in Toluol (ca. 10 g/l) unter Rühren zu einer Lösung von 192,5 ml einer 20 gew.%igen Lösung von Triisobutylaluminium in n-Hexan zugegeben.

Bei der leicht exothermen Reaktion entwich Isobutanol und die Temperatur stieg auf 50°C an.

### Herstellung einer Polymerlösung

In einem 50 l-Reaktor wurden 1,5 kg Cyclohexan, 1,12 kg 1,1-Diphenylethylen und 57,1 ml einer 1 molaren s-Butyllithiumlösung in n-Hexan vorgelegt und bei 50°C 14 h gerührt. Anschließend wurden 0,8 kg Styrol mit 1 kg/h zugegeben, wobei die Temperatur auf 50°C gehalten wurde. 30 Minuten nach beendeter Styrolzugabe wurde mit 22,5 kg Cyclohexan verdünnt und auf 40°C abgekühlt. Der erhaltenen S/DPE-Copolymerblock besaß ein Molekulargewicht Mₙ von 9450 g/mol, M_{w} von 10420 g/mol, M_{w}/Mₙ = 1,10. Zu der Polymerlösung wurden 70 ml frisch austitriertes Tetrahydrofuran zugegeben. Anschließend wurden zuerst 1,36 kg Butadien mit 8 kg/h, dann 2,72 mit 3 kg/h zudosiert.

Diese Polymerlösung wurde in einem 50 l Rührreaktor auf 60 °C erwärmt und mit der frisch bereiteten Katalysatorsuspension versetzt. Anschließend wurde bei 120°C und einem Druck von 18 bar mit Wasserstoff hydriert. Nach 25 h wurde ein Restdoppelbindungsgehalt von 4,1 % ermittelt. Nach weiteren 17,5 h wurde die Lösung auf 60°C abgekühlt. Der Doppelbindungsgehalt betrug 2,6 %.

Anschließend wurde die Reaktionslösung oxidativ mit 300 ml einer Mischung aus 3,6 l Wasser, 360 ml einer 30 %igen Wasserstoffperoxidlösung und 200 ml 98 %iger Essigsäure bei 60°C behandelt, der Rückstand mit Wasser gewaschen und getrocknet.

### Komponente C)

Ein modifizierter Polyphenylenether, hergestellt bei 300°C in einem Zweischneckenextruder durch Umsetzung von
c₁) 99 Gew.-% Poly(2,6-dimethyl-1,4-phenylen)ether mit η _{red} = 0,48 dl/g (bestimmt als 1 gew.-%ige Lösung in Chloroform bei 25°C) und
c₃) 1 Gew.-% Fumarsäure

Die Schmelze wurde entgast, extrudiert, strangförmig durch ein Wasserbad ausgetragen und granuliert.

### Komponente D)

Aluminiumtrisbenzoat

### Komponente E)

Mit tert.-Butylgruppen sterisch gehindertes Phenol (Irganox® 3052 der Fa. Ciba Geigy)

### Komponente F)

Trisnornylphenylphosphit der Fa. Ciba Geigy

### Komponente G)

Glasfasern mit einer Länge von 4,5 mm, einem L/D-Verhältnis von 450 und einer Aminosilan-Schlichte (PPG 3544 der Fa. PPG)

### Beispiele 1 bis 5: Herstellung der thermoplastischen Formmassen

Die in der Tabelle angegebenen Komponenten wurden auf einem Zweischneckenextruder (ZSK 30 der Firma Werner & Pfliederer) bei einer Temperatur von 290°C konfektioniert. Die Polymerschmnelze wurde als Strang ausgetragen, im Wasserbad abgekühlt und granuliert.

### Vergleichsbeispiele V1 bis V4:

Es wurde wie in den Beispielen 1 bis 5 gearbeitet, jedoch wurde als Komponente B) ein Ethylen-Butylen-Styrol-Blockcopolymer mit einem M_{w} von ca. 180.000 g/mol (Kraton® G 1651 der Fa. Shell) eingesetzt.

Die Schlagzähigkeit (Charpy) wurde nach ISO 179/1eU bestimmt, die Wärmeformbeständigkeit (HDT A) nach 150 75-2.

Die Zusammensetzung und Eigenschaften der thermoplastischen Formmassen sind in der Tabelle zusammengestellt. OR=L

| Beispiel | Komponenten [Gew.-%] | | | | | | | | | |
|---|---|---|---|---|---|---|---|---|---|---|
| | A) | B) | C) | D) | E) | F) | G) | Kraton | Schlagzähigkeit [kJ/m²] | Wärmeformbeständigkeit [°C] |
| 1 | 80 | 15 | 3,3 | 0,6 | 0,3 | 0,8 | - | - | 42,2 | - |
| 2 | 85 | 10 | 3,3 | 0,6 | 0,3 | 0,8 | - | - | 39,7 | - |
| 3 | 90 | 5 | 3,3 | 0,6 | 0,3 | 0,8 | - | - | 22,3 | - |
| 4 | 50 | 15 | 3,3 | 0,6 | 0,3 | 0,8 | 30 | - | 67,1 | 245 |
| 5 | 55 | 10 | 3,3 | 0,6 | 0,3 | 0,8 | 30 | - | 57,0 | >250 |
| V1 | 80 | - | 3,3 | 0,6 | 0,3 | 0,8 | - | 15 | 27,2 | - |
| V2 | 85 | - | 3,3 | 0,6 | 0,3 | 0,8 | - | 10 | 21,9 | - |
| V3 | 90 | - | 3,3 | 0,6 | 0,3 | 0,8 | - | 5 | 14,2 | - |
| V4 | 50 | - | 3,3 | 0,6 | 0,3 | 0,8 | 30 | 15 | 55,2 | 239 |

## Patentansprüche

1. Thermoplastische Formmassen, enthaltend
A) 20 bis 96 Gew.-% Sternpolymere, erhältlich durch Polymerisation von vinylaromatischen Monomeren mit einem verzweigenden Monomerbaustein, der mindestens zwei vinylaromatische funktionelle Reste enthält,
B) 3 bis 50 Gew.-% Copolymere aus vinylaromatischen Monomeren, 1,1-Diphenylethylen und ggf. Dienen,
C) 1 bis 15 Gew.-% Polyarylenether,
D) 0 bis 5 Gew.-% Nukleierungsmittel,
E) 0 bis 5 Gew.-% Antioxidantien,
F) 0 bis 5 Gew.-% Stabilisatoren
und
G) 0 bis 50 Gew.-% faser- oder teilchenförmige Füllstoffe.

2. Thermoplastische Formmassen nach Anspruch 1, dadurch gekennzeichnet, daß sie
die Komponente A) in einer Menge von 40 bis 92 Gew.-%,
die Komponente B) in einer Menge von 4 bis 30 Gew.-%
die Komponente C) in einer Menge von 2,5 bis 5 Gew.-%,
die Komponente D) in einer Menge von 0,3 bis 2 Gew.-%,
die Komponente E) in einer Menge von 0,2 bis 2 Gew.-%,
die Komponente F) in einer Menge von 0,5 bis 2 Gew.-% und
die Komponente G) in einer Menge von 0 bis 40 Gew.-%
erhalten.

3. Thermoplastische Formmassen nach den Ansprüchen 1 bis 2, dadurch gekennzeichnet, daß die Komponente A) in Gegenwart eines Katalysatorsystems hergestellt wird, welches als aktive Bestandteile einen Übergangsmetallkomplex der II. bis VIII. Nebengruppe des Periodensystems der Elemente, eine metalloceniumionenbildende Verbindung und ggf. eine Aluminiumverbindung enthält.

4. Thermoplastische Formmassen nach den Ansprüchen 1 bis 3, dadurch gekennzeichnet, daß die Komponente A) als verzweigenden Monomerbaustein Verbindungen der allgemeinen Formel (I) 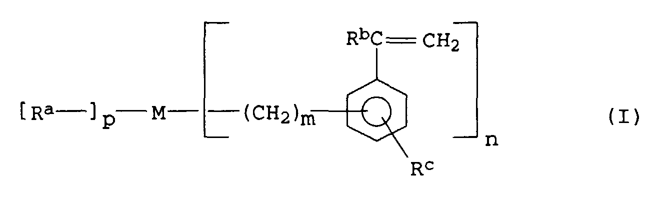 enthält, in der die Substituenten und Indices die folgende Bedeutung haben:
R^{a} Wasserstoff, Halogen, oder ein inerter organischer Rest mit bis zu 20 C-Atomen, wobei R^{a} im Falle von p ≥ 2 gleich oder verschieden sein kann und zwei Reste R^{a} zusammen mit dem an sie gebundenen Metallatom einen 3 bis 8-gliedrigen Ring bilden können und R^{a} ferner ein üblicher Komplexligand sein kann, wenn M ein Übergangsmetall darstellt,
R^{b} Wasserstoff, C₁-C₄-Alkyl oder Phenyl;
R^{c} Wasserstoff, C₁-C₄-Alkyl, Phenyl, Chlor oder ein ungesättigter Kohlenwasserstoffrest mit 2 bis 6 C-Atomen;
M C, Si, Ge, Sn, B, Al, Ga, N, P, Sb, Ti, Zr, Hf, V, Nb, Ta, Cr, Mo, W, Mn, Fe, Ru, Os, Co, Rh, Ir, Ni, Pd, Pt, Cu, Zn, Cd;
n 2-6;
m 0-20;
p 0-4;
mit der Maßgabe, daß die Summe aus n + p der Valenz von M entspricht.

5. Thermoplastische Formmassen nach den Ansprüchen 1 bis 4, dadurch gekennzeichnet, daß die Komponente B) durch anionische Polymerisation hergestellt wird.

6. Thermoplastische Formmassen nach den Ansprüchen 1 bis 5, dadurch gekennzeichnet, daß als Komponente B) ein hydriertes Dreiblockcopolymer eingesetzt wird.

7. Thermoplastische Formmassen nach den Ansprüchen 1 bis 6, dadurch gekennzeichnet, daß als Komponente C) ein mit polaren Gruppen modifizierter Polyphenylenether eingesetzt wird.

8. Verfahren zur Herstellung der thermoplastischen Formmassen gemäß den Ansprüchen 1 bis 7, dadurch gekennzeichnet, daß man die Komponenten bei Temperaturen im Bereich von 270 bis 320°C mischt.

9. Verwendung der thermoplastischen Formmassen gemäß den Ansprüchen 1 bis 7 zur Herstellung von Fasern, Folien und Formkörpern.

10. Fasern, Folien und Formkörper, erhältlich aus den thermoplastischen Formmassen gemäß den Ansprüchen 1 bis 7 als wesentliche Komponente.
